# EUROPEAN PATENT APPLICATION

(11) **EP 0 982 727 A1**
(43) Date of publication of application: **01.03.2000**
(21) Application number: 99902865.7
(22) Date of filing: 09.02.1999
(51) Int. Cl.: G11B 20/10, G10H 1/00

(54) **DIGITAL SIGNAL PROCESSING METHOD AND DEVICE, DIGITAL SIGNAL GENERATING METHOD AND DEVICE, AND SIGNAL RECORDING MEDIUM AND PROGRAM RECORDING MEDIUM**

(30) Priority: 09.02.1998 JP 2758598
(71) Applicant: Sony Corporation, Tokyo 141-0001 (JP)
(72) Inventor: TSUJI, Minoru Sony Corporation, Tokyo 141-0001 (JP); IMAI, Kenichi Sony Corporation, Tokyo 141-0001 (JP); KOIKE, Takashi Sony Corporation, Tokyo 141-0001 (JP)
(74) Representative: Melzer, Wolfgang, Dipl.-Ing.
(86) International application number: JP9900556
(87) International publication number: WO9940584

(57) **Abstract**

Audio data are taken into a data decoding section. The audio data include retaining information indicating the period of time during which an audio data block to be used repeatedly is retained. The data decoding section extracts said retaining information and supplies it to a recording device control section. The data decoding section then records the audio data block to be used repeatedly on a recording device or medium. The data decoding section then supplies the data blocks not to be retained to an audio decoding section. Upon receiving the retaining information, the recording device control section deletes the unnecessary data from the recording device or medium according to the retaining information.

## Description

### Technical Field

This invention relates to a method and an apparatus for processing digital signals that can efficiently utilize data in a processing operation of reproducing digital signals and also to a method and an apparatus for generating digital signals as well as to a signal recording medium and a program recording medium.

### Background Art

Music and pictures can be recorded and reproduced with high quality by means of digital signals but a larger volume of data will be required for recording and reproducing music and pictures with a higher quality.

A large volume of data required to reproduce music and pictures with high quality can be provided by means of a technique of streaming reproduction using a network medium or a reproduction technique using a disk-shaped medium or a tape-shaped medium. If not compressed, the reproduced digital signals are then simply sampled for changes in the temporal direction (and also in the spatial direction in the case of moving pictures). In other words, data are used for all the elapsed time and hence a volume of data that corresponds to all the elapsed time will have to be used. Additionally, digital signals can be subjected to various processing operations such as data division and data synthesis with ease.

As described above, with conventional techniques of utilizing media involving the use of networks, the volume of information in the form of digital signals to be transmitted is correlated with the quality of reproduced digital signals. Hence, the quality of reproduced digital signals is determined as a function of the transmission capacity and it is difficult to improve it beyond that capacity. In the case of storage media, the quality of reproduced signals is correlated with the storage capacity and hence the storable amount of information is temporally reduced if the storage capacity is limited and the information is to be stored with high quality.

### Disclosure of the Invention

It is an object of the present invention to provide a method and an apparatus for processing digital signals adapted to reproduce high quality data with a reduced volume of information.

Another object of the present invention is to provide a method and apparatus for generating digital signals adapted to generate data blocks with information treated by a method and an apparatus for processing digital signals as described above and added thereto.

Still another object of the present invention is to provide a recording medium that can make a method and an apparatus for processing digital signals as described above to suppress the recording capacity to be used.

A further object of the present invention is to provide a program recording medium that can be used to effectively propagate a method for processing digital signals as described above.

According to the invention, there is provided a method for processing digital signals adapted to temporarily store a data block to be used repeatedly at least twice out of a plurality of data blocks obtained at least by dividing a digital signal on a time base.

According to the invention, there is also provided an apparatus for processing digital signals to reproduce digital signals comprising a first decoding means for separating a data block to be used repeatedly at least twice from the remaining data blocks of a plurality of data blocks obtained at least by dividing a digital signal on a time basis and decoding said data block to be used repeatedly at least twice, a retaining means for temporarily storing said data block to be used repeatedly at least twice from said first decoding means and a second decoding means for decoding said remaining data blocks from said first decoding means and said data block to be used repeatedly at least twice from said retaining means.

According to the invention, there is also provided a method for generating digital signals adapted to add retaining information to a data block to be used repeatedly at least twice out of a plurality of data blocks obtained at least by dividing a digital signal on a time base.

According to the invention, there is also provided an apparatus for generating digital signals comprising an encoding means for adding retaining information to a data block to be used repeatedly at least twice out of a plurality of data blocks obtained at least by dividing a digital signal on a time base.

According to the invention, there is also provided a signal recording medium adapted to record a data block to be usable repeatedly at least twice out of a plurality of data blocks with corresponding information for indicating the period of time for retaining said data block.

According to the invention, there is also provided a program recording medium carrying a recorded program comprising a first decoding step of separating a data block to be used repeatedly at least twice from the remaining data blocks of a plurality of data blocks obtained at least by dividing a digital signal on a time basis and decoding said data block to be used repeatedly at least twice, a retaining step of temporarily storing said data block to be used repeatedly at least twice from said first decoding step and a second decoding step of decoding said remaining data blocks from said first decoding step and said data block to be used repeatedly at least twice from said retaining step.

Specifically, the present invention provides a technique of retaining data that have to be used repeatedly in a process of reproducing digital signals such as audio signals and video signals on a recording device such as a memory device or a hard disk or a recording medium and reutilize the retained data.

Each block of data to be retained is made to contain as part there of retaining information on the period of time for retaining the data and retained according to the retaining information. The retaining information takes the form of a bit string and contains the elapsed time since the data were read and the elapsed time since the overall processing operation started.

The read data or the data retained on the recording device or the recording medium will be used for each data reproducing operation. In other words, data that can be used repeatedly will be reutilized. When the period of time as indicated by the retained data has elapsed, the obsolete and unnecessary data will be deleted from the recording device or the recording medium on which the data have been recorded.

Thus, the overall volume of data to be recorded on the recording medium can be reduced.

### Brief Description of the Drawings

FIG. 1 is a block diagram of an embodiment of an apparatus for processing digital signals according to the invention, which is an audio data reproducing apparatus, and adapted to use a method for processing digital signals according to the invention.
FIG. 2 is an example of retaining information that can be extracted by the data decoding section data decoding section of the audio data reproducing apparatus of FIG. 1.
FIG. 3 is another example of retaining information that can be extracted by the data decoding section data decoding section of the audio data reproducing apparatus of FIG. 1.
FIG. 4 is a still another example of retaining information that can be extracted by the data decoding section data decoding section of the audio data reproducing apparatus of FIG. 1.
FIG. 5 is a schematic illustration showing an example of location that can be used for adding retaining information to audio data.
FIG. 6 is a schematic illustration showing another example of location that can be used for adding retaining information to audio data.
FIG. 7 is a flow chart of the operation of the data decoding section of the audio data reproducing apparatus of FIG. 1.
FIG. 8 is a flow chart of the operation of the recording device control section of the audio data reproducing apparatus of FIG. 1.
FIG. 9 is a flow chart of the operation of the audio data decoding section of the audio data reproducing apparatus of FIG. 1.
FIG. 10 is a schematic illustration showing how audio data are divided into a plurality of data blocks with ID numbers added thereto and intermittently reproduced.
FIG. 11 is a schematic illustration showing an example of reproduction timing information that can be used for intermittently reproducing the data of FIG. 10.
FIG. 12 is a schematic illustration showing another example of reproduction timing information that can be used for intermittently reproducing the data of FIG. 10.
FIG. 13 is a schematic block diagram of an embodiment of apparatus for processing digital signals according to the invention and adapted to reproduce data intermittently, which is an audio data reproducing apparatus 20.
FIG. 14 is a schematic illustration showing the order of reproducing data when the data are reproduced continuously.
FIG. 15 is a block diagram of a system centered around a CPU and configured to read a software program from a ROM and execute the program, said system being adapted to use a method for processing digital signals according to the invention.
FIG. 16 is a schematic illustration of the operation of an encoder for adding retaining information to audio data to be retained.

### Best Modes for Carrying out the Invention

Now, a method and an apparatus for processing digital signals according to the invention by referring to the accompanying drawings that illustrate embodiments of the invention.

Firstly an embodiment of apparatus for processing digital signals according to the invention and adapted to use a method for processing digital signals according to the invention will be described. This embodiment is an audio data reproducing apparatus for reproducing audio data.

The audio data reproducing apparatus is adapted to retain a data block that is to be used repeatedly out of a plurality of data blocks obtained at least by dividing the digital data representing a work of music into measures or phrases on a time base and reutilize it.

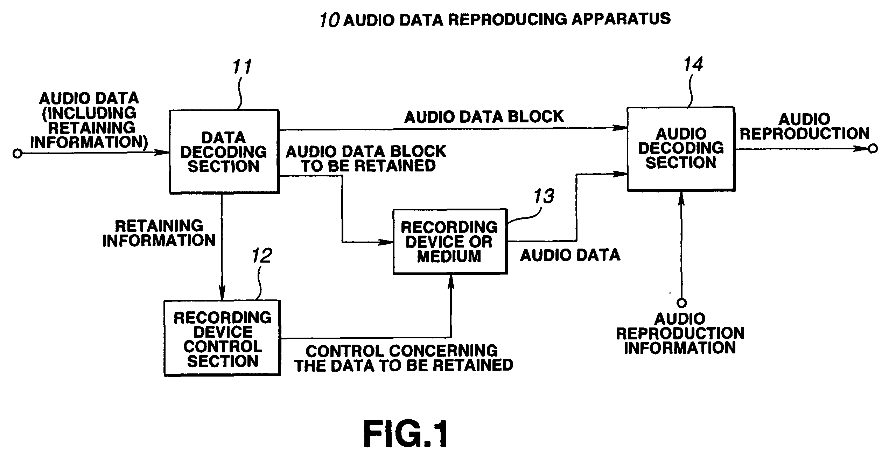

FIG. 1 is a block diagram of the audio data reproducing apparatus. The audio data reproducing apparatus 10 is fed with audio data taken in by a recording medium such as a hard disk by way of a network. Alternatively, the audio data may have been stored in the recording medium in advance. Anyhow, the audio data are read out typically by means of a drive unit and fed to the apparatus.

The audio data contains retaining information on the period of time during which the data block to be repeatedly used at least twice is temporarily retained. More specifically, the retaining information represents the period of time from the time when the data block to be repeatedly used at least twice is read in by the data decoding section of the audio data reproducing apparatus to the time when the data block is deleted.

Of course, the audio data contains data blocks that are not to be repeatedly used other than the data block that is to be repeatedly used at least twice. In other words, the data blocks of the audio data include the data block to be retained.

Then, the audio data are taken in by the data decoding section 11 of the audio data reproducing apparatus 10 of FIG. 1. As described above, the audio data contains retaining information on the retaining period of time of the data block to be retained. Upon receiving the audio data, the data decoding section 11 extracts the retaining information and supplies it to recording device control section 12. The data decoding section 11 also records the data block to be retained on a recording device or medium 13. The data decoding section 11 supplies all the data blocks including the data block to be retained to audio decoding section 14.

Upon receiving the retaining information sent from the data decoding section 11, the recording device control section 12 deletes the data that are now unnecessarily from the recording device or medium 13. In short, it controls operations concerning retaining data.

The audio decoding section 14 sequentially reproduces the audio data blocks from the data decoding section 11 and the audio data block retained on the recording device or medium 13, using the information on reproducing the audio data that can be read in as control data as well as said audio data from said recording medium.

Information on reproducing audio data as used herein refers to information indicating the data to be actually reproduced. In other words, it refers to information indicating if it is the audio data from the data decoding section 11 or the audio data retained on the recording device or medium 13 that are to be reproduced. Thus, the audio data will be reproduced in the right order according to the information.

The recording device or medium 13 is typically a semiconductor memory or a hard disk used to retain an audio data block that can or is to be used repeatedly.

Said retaining information indicates the period of time for which said audio data block is to be retained. The retaining information is added to the audio data block to be retained.

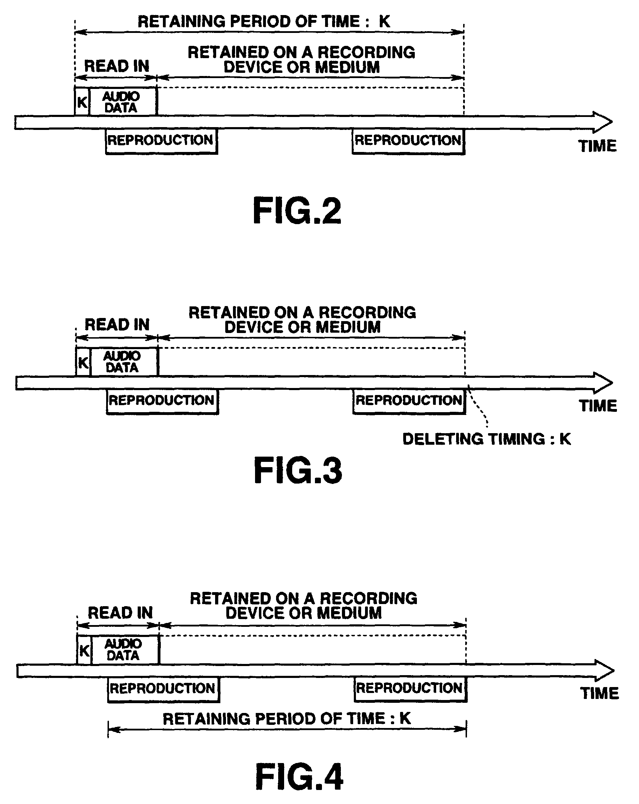

Said retaining information shows the period of time from the time when said audio data block is read in onto the recording device or medium 13 to the time when it is deleted as described above in the form of a bit string. Thus, it may indicate the retaining period k, as shown in FIG. 2, from the time when the data decoding section 11 reads in the audio data block, after which the audio decoding section 14 decodes and reproduces it for the first time, to the time when the next reproduction of the decoded data block is over, during which the data block is retained on the recording device or medium 13.

Alternatively, the elapsed time from the time when the processing operation of reproducing the entire data blocks starts to the time when the retained data block is to be deleted may be expressed in the form of a bit string as shown in FIG. 3. Still alternatively, the period of time from the time when the data block is reproduced for the first time to the time when it is deleted may be used as shown in FIG. 4.

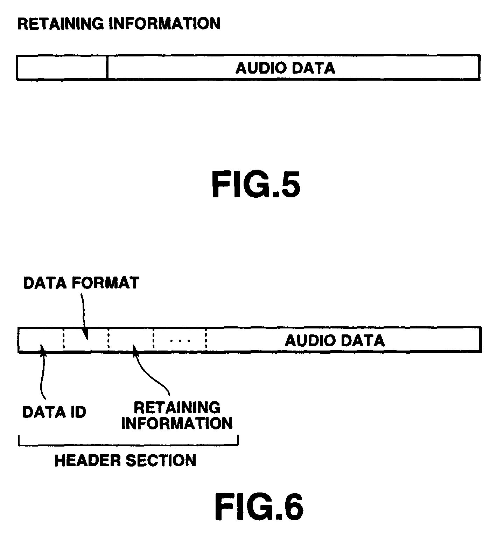

The retaining information can be recorded within the header as part of audio data as shown in FIG. 5. Alternatively, it may be recorded with other information such as information indicating the data ID and the format including the compression method as shown in FIG. 6 and will be described hereinafter. Still alternatively, it may be recorded not at the top as part of the header but at the tail end of the data.

If, for example, the retaining information indicates the retaining period k as shown in FIG. 2, the recording device control section 12 deletes the retained data block from the recording device or medium 13 when the period of time as indicated by the retaining information is over.

However, the recording device control section 12 may try to delete the retained audio data while the data are still being reproduced. This may not give rise to any problem if the data to be reproduced are copied on a reproduction buffer (not shown) of the audio decoding section 14 and the data copied on the reproduction buffer are used for the reproducing operation. Then, the actual reproducing operation may be not affected if the recording device control section 12 deletes the data on the recording device or medium 13 while the data are being reproduced. Alternatively, the recording device control section 12 may be so controlled that it monitors the reading out operation and deletes the data only when the data reproducing operation is over.

If the retaining information is not attached to the data, the data may be deleted when the processing operation or some other operation is over. If the retaining information is expressed in the form of a bit string (e.g., 0xffffffff when the retaining information is expressed in 4 bytes), it may be so defined that the data are retained on the recording device or medium until time when the processing operation of reproducing the entire data blocks is over.

As described above, the audio data reproducing apparatus 10 attach retaining information to the audio data block and the data of the data block are retained on the recording device or medium 13 according to the information.

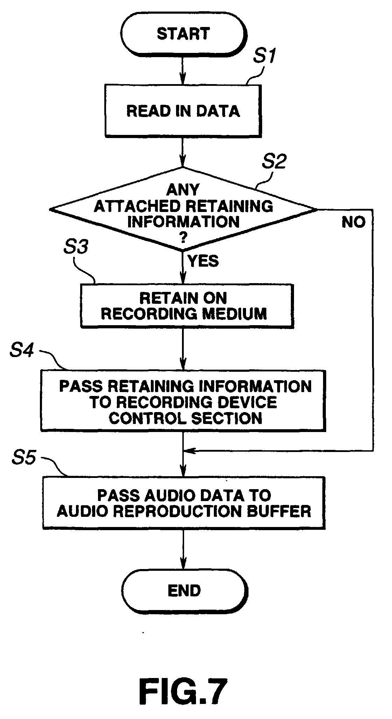

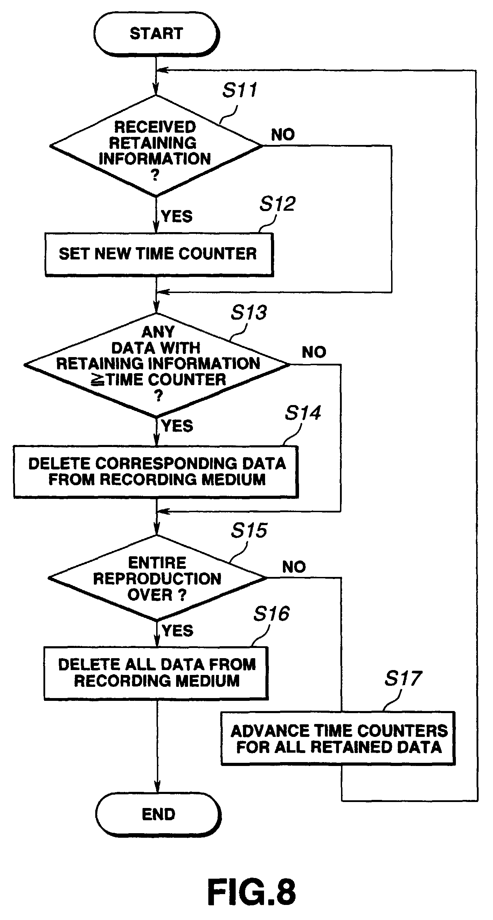

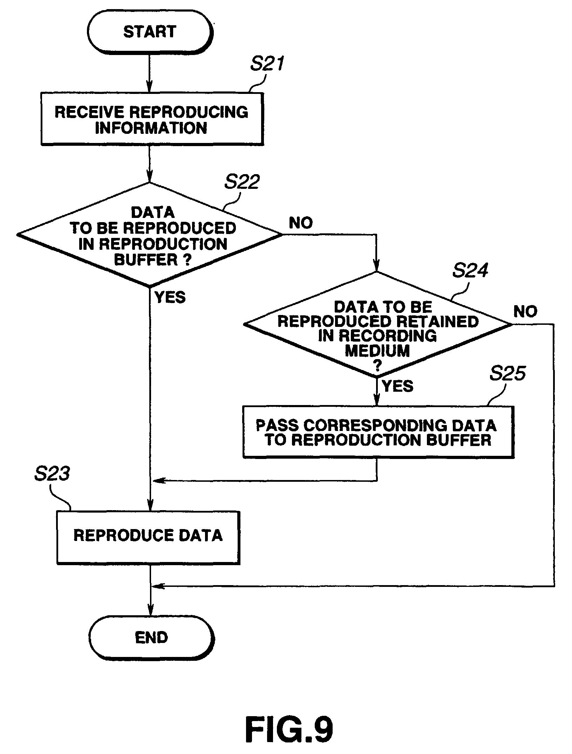

Now, the operation of the audio data reproducing apparatus 10 will be described in detail by referring to FIGS. 7 through 9. FIG. 7 is a flow chart of the operation of the data decoding section 13 that can be used for the purpose of the invention and FIG. 8 is a flow chart of the operation of the recording device control section 12 that can be used for the purpose of the invention, whereas FIG. 9 is a flow chart of the operation of the audio decoding section that can also be used for the purpose of the invention.

After reading in the audio data in Step S1, the data decoding section 11 determines if retaining information is attached to the header of the read in audio data or not in Step S2. If retaining information is attached to the audio data, the data or the audio data block to be retained are stored on the recording device or medium 13. Said retaining information is also delivered to the recording device control section 12. Then, the audio data are delivered to the audio reproduction buffer contained in the audio decoding section 14 in Step S5 so that the audio data may be reproduced at this time. If the audio data are not reproduced at this time, an operation of retaining the data on the recording device or medium 13 may simply be conducted and the data may be discarded.

If, on the other hand, it is determined in Step S2 that no retaining information is attached to the audio data, the processing operation proceeds to Step S5, where all the audio data blocks are delivered to the audio reproduction buffer contained in the audio decoding section 14.

Thus, depending on the judgment of the data decoding section 11 if retaining information is attached to the audio data block or not, the retaining information, if any, attached to the audio data block is fed to the recording device control section 12 while all the audio data blocks including the one to be retained on the recording device or medium 13 are fed to the audio decoding section 14.

Then, in Step S11, the recording device control section 12 determines if it has received the retaining information from the data decoding section 11 or not. If it is determined that the retaining information has been received, the processing operation proceeds to Step S12, where a new time counter is prepared and set to an initial value. Thus, the recording device control section 12 has pieces of retaining information and time counters, the number of which is equal to the number of data blocks retained in the apparatus. Then, the recording device control section 12 determines in Step S13 if any of the time counters shows that the period of time indicated by the related retaining information has elapsed or not. If there is a time counter showing that the period of time indicated by the related retaining information has elapsed, the recording device control section 12 deletes the corresponding retained audio data block from the recording device or medium 13 in Step S13.

If the data are being reproduced when it they are deleted, they are not affected by the deleting operation because the data being actually reproduced are those stored in the reproduction buffer for the purpose of reproduction. Then, in Step S15, the recording device control section 12 determines if the entire data reproducing operation is over or not and, if it is determined that the entire data blocks, which may represent a work of music, have been reproduced, it deletes all the data remaining on the recording device or medium 13 in Step S16. If, on the other hand, it is determined in Step S15 that the entire data reproducing operation is not over yet, the processing operation proceeds to Step S17, where all the time counters for the retained data are made to advance. Thus, the above processing operation will be repeated with the advanced time counters.

On the other hand, upon receiving the information for audio reproduction in Step S21, the audio decoding section 14 determines in Step S22 if there are any data to be reproduced in the reproduction buffer or not. If it is determined that there are data to be reproduced, the processing operation proceeds to Step S23, where data will reproduced sequentially in good order according to said information for audio reproduction. If, on the other hand, it is determined in Step S22 that there are not any data to be reproduced, the processing operation proceeds to Step S24, where the audio decoding section 14 determines if any data to be reproduced are retained on the recording device or medium 13 or not. If it is determined that data to be reproduced are retained on the recording device or medium 13, the processing operation proceeds to Step S25, where the audio decoding section 14 takes the corresponding data into the reproduction buffer. Thereafter, the processing operation proceeds to Step S23, where data will be reproduced sequentially in good order according to said information on audio reproduction.

The information on audio reproduction typically utilizes an ID number for the audio data to be reproduced as shown in FIG. 6. If the data represented by an ID number are already found in the reproduction buffer, they will be reproduced. If they are retained on the recording device or medium 13, they will be copied onto the reproduction buffer so as to make them ready for being copied.

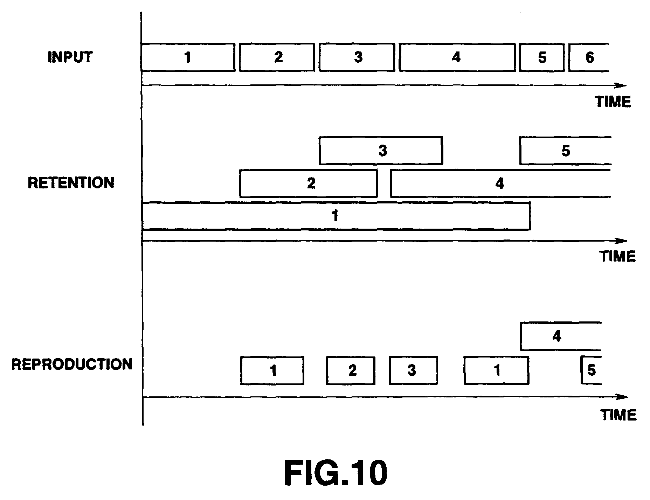

FIG. 10 is a schematic illustration of an example where audio data are divided into a plurality of data blocks with ID numbers added thereto for identification. FIG. 10 shows the data blocks in three different states of input, retention and reproduction. Referring to FIG. 10, data block 1 will be retained on the recording device or medium 13 until the end of the second reproducing operation according to the retaining period of time, whereas all the other data blocks including data blocks 2, 3, 4 and 5 will be deleted when the first reproducing operation is over.

Thus, once the data block 1 is input as shown in the state of input in FIG. 10, it will be retained until the end of the state of reproduction (or even thereafter) as clearly seen from the state of retention of FIG. 10.

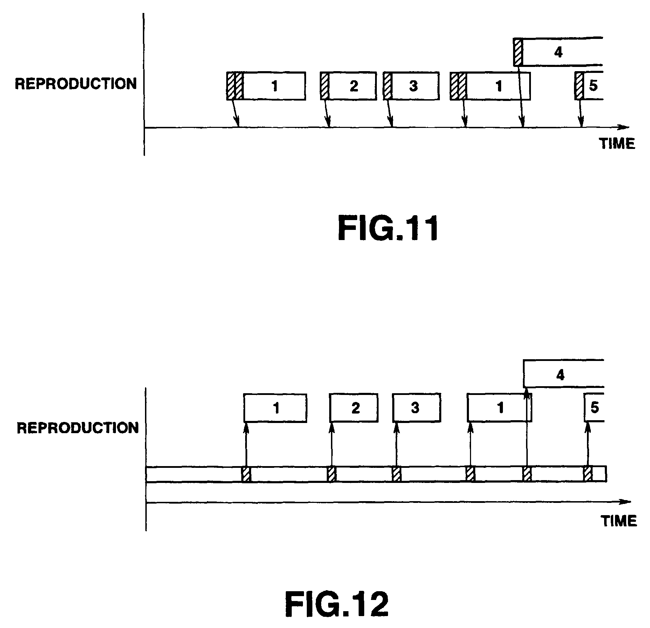

If data are reproduced intermittently as shown in the state of reproduction in FIG. 10, each of the data blocks requires information for the timing of reproduction. Then, each data block may be made to contain the reproduction timing information to be used for itself as shown in FIG. 11 or an independent data block may be made to contain the reproduction timing information for all the data blocks and used to control the operation of reproducing each of the data blocks according to a time counter as shown in FIG. 12.

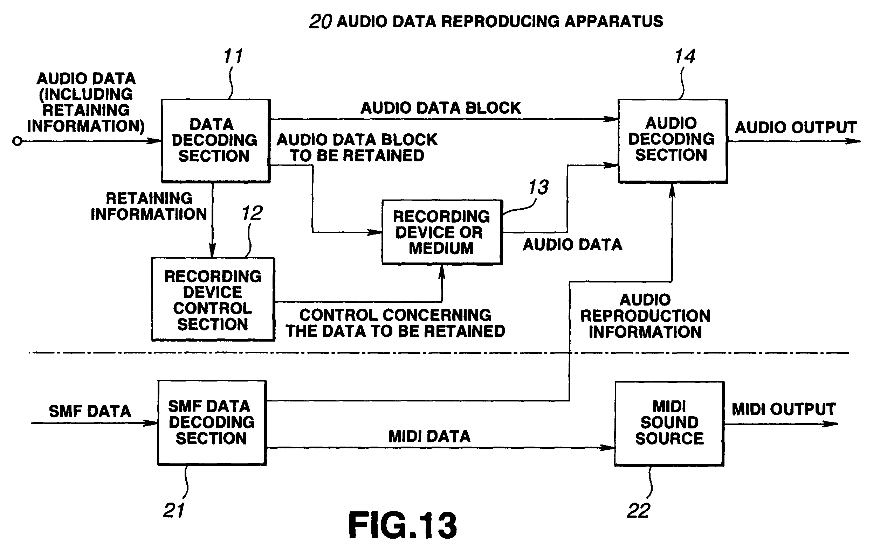

Now, an embodiment of audio data reproducing apparatus according to the invention and adapted to realize a method for processing digital signals as described above will be described. Note, however, that such a method is proposed by and described in greater detail in Japanese Patent Application Laid-Open No. 10-27584 filed by the applicant of the present patent application. The embodiment is an audio data reproducing apparatus 20 adapted to reproduce data intermittently as shown in FIG. 13.

The embodiment of audio data reproducing apparatus is designed to reproduce a MIDI signal in the musical instrument digital interface (MIDI) format and an audio signal other than a MIDI signal and hence not for an instrument, which may be an audio signal for vocals, simultaneously.

It comprises a data decoding section 11, a recording device control section 12, a recording device or medium 13 and an audio decoding section 14. Since the components and their detailed operations are same as those described above by referring to FIGS. 1 through 12, they will not be described here any further.

A MIDI signal is dealt as standard MIDI file (SMF) for keeping files compatible among different sequencers or different pieces of sequence software. SMF data may be recorded on a recording medium along with audio data by way of a network or stored in advance in a recording medium. SMF data are used not to directly operate a MIDI sound source 22 but to operate sequence software to make it output a MIDI signal. The MIDI sound source 22 then emits a musical sound according to the MIDI signal.

SMF data are taken in by SMF data decoding section 21. The SMF data decoding section 21 extracts the information for audio reproduction added to the SMF data by the encoder and sends them to the audio decoding section 14. The SMF data decoding section 21 also extracts the MIDI data from the SMF data and sends them to the MIDI sound source 22.

The information for audio reproduction contains ID numbers of the audio data blocks to be reproduced along with reproduction timing information. Since the data blocks have respective ID numbers as described above, the audio decoding section 14 can intermittently reproduce audio data by using the information for audio reproduction.

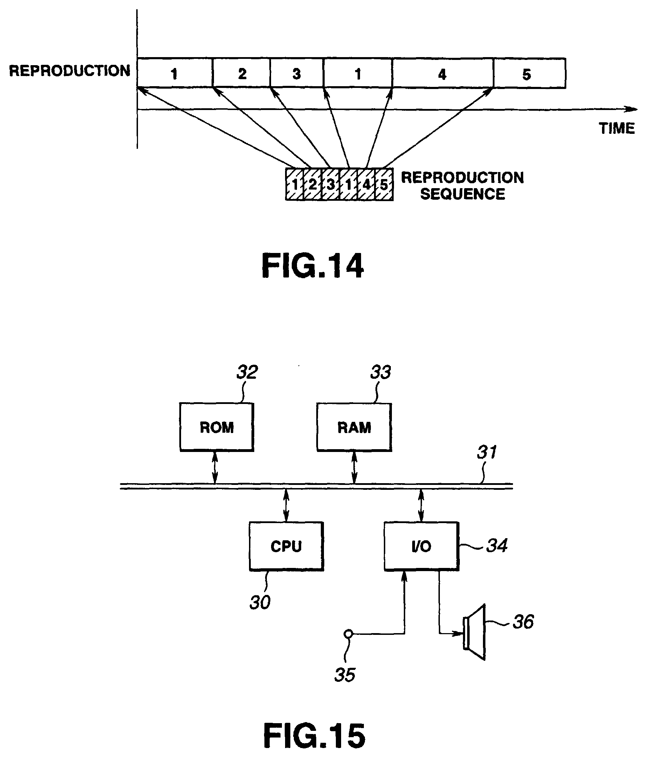

If, on the other hand, data are reproduced continuously as shown in FIG. 14, data may be reproduced according to information showing the sequence of reproducing data. For example, the SMF data or some other data may be made to contain information on the sequence of reproducing data so that the operation of reproducing data blocks may be controlled according to the information.

As described above, data can be processed efficiently with the above embodiment to reduce the entire volume of data to be processed. For instance, when an audio signal is reproduced for a work of music, part of the work of music may be played repeatedly as refrain. Particularly, a same refrain may be played exactly in a same manner in the case of synthesized music such as MIDI music. Conventionally, the audio data sequence for such a refrain is prepared each time to make the operation very redundant. The redundancy of conventional techniques will be significantly reduced by a method according to the invention. Then, in the case of reproducing an audio signal by way of a network, the volume of data to be transmitted can be reduced to improve the quality of the reproduced sound when the rate of data transmission is limited. With a method according to the invention, it is now possible to transfer data at an enhanced rate. In a case involving the use of a storage medium, the volume of data to be stored can be reduced for a work of music so that the storage medium may be used to store a variety of different data. This advantage holds true not only for audio data but also video data or text data.

The above described embodiment of audio data reproducing apparatus 10 comprises a method for processing digital signals as part of its hardware. However, a method for processing digital signals according to the invention may be realized in the form of a software program.

A software program for realizing a method for processing digital signals according to the invention typically includes a first decoding step of separating a data block to be used repeatedly at least twice of a plurality of the data blocks obtained by dividing a digital signal from the remaining data blocks of said plurality of data blocks and decoding said data block, a retaining step of temporarily retaining said data block to be used repeatedly at least twice and a second decoding step of decoding said remaining data blocks from said first decoding step and also said data block to be used repeatedly at least twice from said retaining step. The software program is typically stored in a semiconductor memory or a recording medium such as a magnetic disk or an optical disk.

FIG. 15 is a bock diagram of a digital signal processing system centered around a CPU 30 and configured to sequentially take out instructions from ROM 32 storing the software program and execute them. The CPU 30 is connected to the ROM 32, a RAM 33 operating as work area and an I/O interface by way of a bus 31.

The CPU 30 sequentially takes out the software program realized by applying a method for processing digital signals according to the invention from the ROM 32. As the CPU 30 executes the software program, it carries out processing operations substantially same as the audio data reproducing apparatus 10 shown in FIG. 1 or the audio data reproducing apparatus 20 shown in FIG. 13.

Thus, it temporarily retains the data block to be used repeatedly for many times of a plurality of data blocks obtained by dividing the digital data of, for example, a work of music on a time base to represent respective measures or phrases. A same phrase may be used repeatedly typically as refrain in a work of music. The data for such a phrase will be retained and reused repeatedly according to the invention.

Thus, in a digital signal processing system as shown in FIG. 15, the software program stored in the ROM 32 is sequentially taken out and executed to efficiently process data and reduce the overall volume of data to be used for the program.

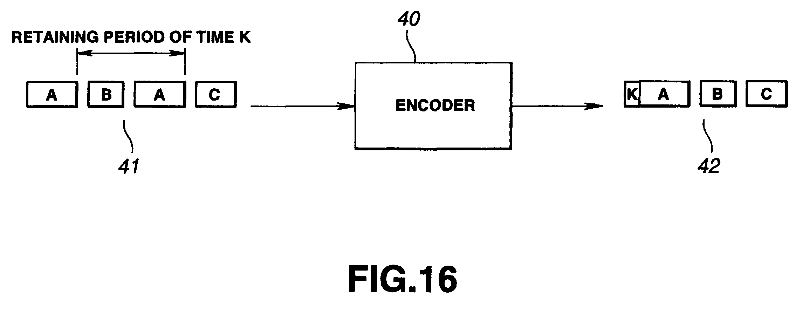

Now, an embodiment of encoder that can be used to generate an audio data block containing retaining information in the audio data reproducing apparatus 10 shown in FIG. 1, the audio data reproducing apparatus 20 shown in FIG. 13 or the digital signal processing system shown in FIG. 15 will be described by referring to FIG. 16.

The embodiment of encoder 40 adds retaining information k to audio data block A in a data block string 41 including a plurality of audio data blocks A, B, C and outputs the data block string.

More specifically, the period of time from the time when the data block A is read into said recording device or medium 13 of said audio data reproducing apparatus 10 or said audio data reproducing apparatus 20 to the time when it is deleted is expressed by a bit string, which is then added as retaining information k to the header of the data block A of the data block string 42 to be output.

The data block A to be retained may be specified by the user as a result of a manual input operation or determined automatically from the agreement of the spectra or the waveforms. The data block A is a data block that is to be used repeatedly at least twice.

Thus, when the period of time indicated by the retaining information k is over, the audio data reproducing apparatus 10 or the audio data reproducing apparatus 20 has its recording device control section 12 delete the retained data block A from the recording device or medium 13.

For the purpose of the present invention, retaining information may indicate the period of time for retaining the data block or the time until which the data block is retained as described earlier by referring to FIGS. 2 through 4.

Therefore, the embodiment of encoder 40 can add the retaining information for the audio data block to be retained to the audio data block itself in an easy fashion. It will be appreciated that such an encoder 40 as illustrated in FIG. 16 may be installed in the personal computer of the client.

As described above, a method and an apparatus for processing digital signals according to the invention utilize the phenomenon that identical or similar information can appear repeatedly in a digital signal that may be an audio signal or a video signal and extract the data of the identical or similar part of the digital signal to use them repeatedly so that the receiver of the signal may retain and then delete the data to realize high quality signal reproduction with a reduced amount of information.

Additionally, a method and an apparatus for processing digital signals according to the invention can add data representing the period of time during which an audio data block is to be retained to the audio data block itself that is to be retained in an easy fashion.

Data can be processed efficiently by using a program recording medium according to the invention to reduce the overall volume of data to be processed.

A signal recording medium according to the invention can be used to make a method and an apparatus for processing digital signals extract and utilize the data of identical or similar parts of a digital signal so that the digital signal may be processed with a reduced recording capacity.

## Claims

1. A digital signal processing method for reproducing digital signals characterized by:
being adapted to temporarily store a data block to be used repeatedly at least twice out of a plurality of data blocks obtained at least by dividing a digital signal on a time base.

2. A digital signal processing method according to claim 1, characterized in that said digital signal is taken into a recording medium by way of a network before it is reproduced.

3. A digital signal processing method according to claim 1, characterized in that said digital signal is stored in a recording medium in advance.

4. A digital signal processing method according to claim 1, characterized in that it uses information indicating the period of time during which said data block to be used repeatedly at least twice is retained.

5. A digital signal processing method according to claim 4, characterized in that said information indicates the period of time from the time when said data block to be used repeatedly at least twice is read in to the time when said data block is deleted.

6. A digital signal processing method according to claim 4, characterized in that said information indicates the number of times of reading other data after reading in said data block to be used repeatedly at least twice.

7. A digital signal processing method according to claim 4, characterized in that said information indicates the elapsed time from the time when the overall processing operation starts to the time when said data block to be used repeatedly at least twice is deleted.

8. A digital signal processing method according to claim 4, characterized in that said information indicates the time when said data block to be used repeatedly at least twice is deleted.

9. A digital signal processing method according to claim 4, characterized in that said information indicates the period of time from the time when said data block to be used repeatedly at least twice is reproduced for the first time to the time when it is deleted.

10. A digital signal processing method according to claim 4, characterized in that said information is added to said data block to be used repeatedly at least twice as part thereof.

11. A digital signal processing method according to claim 4, characterized in that said data block to be used repeatedly at least twice is deleted when the retaining period of time indicated by said information has passed and the processing operation for reproducing the digital signal is over.

12. A digital signal processing method according to claim 4, characterized in that, if the retaining period of time indicated by said information is shorter than the time necessary for actually reproducing said data block to be used repeatedly at least twice, said data block is deleted when the operation of reproducing said data block is over.

13. A digital signal processing method according to claim 4, characterized in that said data blocks to which said information is not added are deleted when the processing operation of reproducing them is over.

14. A digital signal processing method according to claim 4, characterized in that, when said information is expressed by a predetermined bit string, said data block to be used repeatedly at least twice is retained until time when the processing operation of reproducing all the data blocks is over.

15. A digital signal reproducing apparatus for reproducing digital signals, characterized by comprising:
a first decoding means for separating a data block to be used repeatedly at least twice from the remaining data blocks of a plurality of data blocks obtained at least by dividing a digital signal on a time basis and decoding said data block;
a retaining means for temporarily retaining said data block to be used repeatedly at least twice from said first decoding means; and
a second decoding means for decoding said remaining data blocks from said first decoding means and said data block to be used repeatedly at least twice from said retaining means.

16. A digital signal reproducing apparatus according to claim 15, characterized in that said first decoding means extracts information indicating the period of time during which said data block to be used repeatedly at least twice is retained from said data block.

17. A digital signal reproducing apparatus according to claim 16, characterized by further comprising a control means for deleting said data block to be used repeatedly at least twice from said retaining means according to said information extracted by said first decoding means.

18. A digital signal reproducing apparatus according to claim 15, characterized in that said second decoding means decodes each of said data blocks, using identification information for identifying each of said data blocks.

19. A digital signal reproducing apparatus according to claim 15, characterized in that said second decoding means decodes each of said data blocks, using said identification information and additionally reproduction timing information.

20. A digital signal generating method characterized by being adapted to add retaining information to a data block to be used repeatedly at least twice out of a plurality of data blocks obtained at least by dividing a digital signal on a time base.

21. A digital signal generating method according to claim 20, characterized in tat said data block to be used repeatedly at least twice represents data blocks showing a high degree of similarity.

22. A digital signal generating apparatus characterized by comprising an encoding means for adding retaining information to a data block to be used repeatedly at least twice out of a plurality of data blocks obtained at least by dividing a digital signal on a time base.

23. A digital signal generating apparatus according to claim 22, characterized in that said data block to be used repeatedly at least twice represents data blocks showing a high degree of similarity.

24. A signal recording medium adapted to record a plurality of data blocks obtained at least by dividing a digital signal on a time base, characterized by recording a data block usable repeatedly at least twice with corresponding information for indicating the period of time for temporarily retaining said data block.

25. A program recording medium carrying a recorded program characterized by comprising:
a first decoding step of separating a data block to be used repeatedly at least twice from the remaining data blocks of a plurality of data blocks obtained by dividing a digital signal on a time basis and decoding said data block to be used repeatedly at least twice;
a retaining step of temporarily storing said data block to be used repeatedly at least twice from said first decoding step; and
a second decoding step of decoding said remaining data blocks from said first decoding step and said data block to be used repeatedly at least twice from said retaining step.
